# EUROPÄISCHE PATENTANMELDUNG

(11) **EP 1 142 915 A1**
(43) Veröffentlichungstag der Anmeldung: **10.10.2001**
(21) Anmeldenummer: 01108413.4
(22) Anmeldetag: 03.04.2001
(51) Int. Cl.: C08F 8/00

(54) **Additivarme strahlenhärtbare Bindemittel**

(30) Priorität: 04.04.2000 DE 10016652
(71) Anmelder: BASF AKTIENGESELLSCHAFT, 67056 Ludwigshafen (DE)
(72) Erfinder: Binder, Horst, 68623 Lampertheim (DE); Neumann, Petra, 67459 Böhl-Iggelheim (DE)
(74) Vertreter: Kinzebach, Werner, Dr.

(57) **Zusammenfassung**

Die Erfindung betrifft additivarme, transparente, unverfärbte und unvernetzte strahlenhärtbare Bindemittel, die erhältlich sind durch polymeranaloge Umsetzung von epoxidgruppen-haltigen (Meth)acrylat-Copolymerisaten (A) mit einer ungesättigten Monocarbonsäure (B), wobei a) das Copolymerisat (A) mit mindestens 2 Äquivalenten der Carbonsäure (B), b) in Abwesenheit von Reaktionsbeschleunigern und Inhibitoren, c) in einem kontinuierlich betriebenen Reaktor, d) lösungsmittelfrei, e) bei 130 bis 170°C, f) mit einem Umsetzungsgrad von mindestens 90% in einer möglichst kurzen, aber hinreichenden mittleren Verweilzeit, die unterhalb von 13 bis 22 Minuten liegt, umgesetzt wird. Die Umsetzungsprodukte enthalten kaum Nebenprodukte und sind vorteilhafte Bindemittel für Klar- und Pulverlacke.

## Beschreibung

Die Erfindung betrifft additivarme transparente, unverfärbte und unvernetzte strahlenhärtbare Bindemittel, die durch polymeranaloge Umsetzung eines epoxidgruppenhaltigen Acrylcopolymerisats mit einer olefinisch ungesättigten Carbonsäure hergestellt sind.

Bindemittel der vorgenannten Art sind an sich bekannt. So ist z.B. aus der Patentanmeldung WO 93/25590 bekannt, Polymere mit ungesättigten Seitengruppierungen für Decklacke in der Automobilindustrie herzustellen, indem ein Copolymerisat A, das Monomere (a) mit einer Epoxy-, Carbonsäure-, Hydroxyl- oder Isocyanatogruppe einpolymerisiert enthielt, polymeranalog mit einem Monomeren (B) umgesetzt wird, das eine funktionelle Gruppierung enthielt, die mit der funktionellen Gruppe des Copolymerisats (A) reagieren kann. Monomere B waren z.B. (Meth)acrylsäure, Glycidyl(meth)acrylat, Allylglycidylether, Hydroxyethyl(meth)acrylat oder Maleinsäure. Zur batchweisen polymeranalogen Umsetzung wurden die funktionellen Monomeren B bei 50 bis 150°C unter Rühren in ca. 50%-ige Lösungen der Copolymerisate A eingetropft in Gegenwart eines Reaktionsbeschleunigers für die Umsetzung der funktionellen Gruppen sowie in Gegenwart eines Polymerisationsinhibitors wie einer Hydrochinonverbindung. Der Ansatz wurde dann unter Rühren einige Stunden bei der genannten Temperatur gehalten. Gemäß der DE-A 4337482 wurden solche Acrylcopolymerisate A polymeranalog mit den funktionellen olefinisch ungesättigten Monomeren B in hochkonzentrierter Lösung oder in Substanz bei 70 bis 150°C bei einer mittleren Verweilzeit von insbesondere 5 bis 10 Minuten umgesetzt, wobei das Verhältnis der funktionellen Gruppen des Copolymerisats A zu den funktionellen Gruppen des Monomeren B bevorzugt 1:1 betrug. Auch hier erfolgte nach den Beispielen die polymeranaloge Umsetzung in Gegenwart eines Reaktionsbeschleunigers (eines Phosphins) und eines Phenothiazins als üblichem Polymerisationsinhibitor (vgl. auch Spalte 6, Zeile 65 bis Spalte 7, Zeile 3). Die WO 97/46 594 beschreibt, daß sich entsprechende polymeranaloge Umsetzungen auch bei einer Temperatur von 150 bis 200°C während 50 bis 60 Minuten in Abwesenheit eines Reaktionsbeschleunigers ohne Gelierung durchführen lassen, wenn man in Gegenwart angemessener Inhibitormengen (vgl. S.1, letzter Textabsatz sowie Anspruch 1) und mit wirksamem Wärmeaustausch arbeitet und das Entstehen lokaler Überhitzungen vermeidet. Als Inhibitoren sind Hydrochinon und dessen Monoether, Phenothiazin, aromatische Diamine und Triphenylphosphit genannt.

Es hat sich nun gezeigt, daß strahlen- und insbesondere UV-härtbare Bindemittel dieser Art besonders vorteilhaft bei manchen Anwendungen sind und verbesserte optische Eigenschaften und Witterungsstabilität aufweisen, wenn sie möglichst wenig niedermolekulare Nebenbestandteile, wie Inhibitoren oder Reaktionsbeschleuniger bzw. Katalysatoren enthalten.

Der vorliegenden Erfindung lag somit die Aufgabe zugrunde, strahlenhärtbare Bindemittel mit seitenständigen olefinisch ungesättigten C=C-Doppelbindungen durch polymeranaloge Umsetzung von Epoxidgruppen enthaltenden Acrylcopolymerisaten mit carboxylgruppenhaltigen Monomeren mit vermindertem Gehalt an niedermolekularen Nebenbestandteilen und somit verbesserten optischen Eigenschaften herzustellen, die besonders vorteilhaft als transparente unverfärbte Lackbindemittel für z.B. Deck- und Klarlacke verwendet werden können.

Es wurde nun gefunden, daß diese Aufgabe gelöst wird durch additivarme strahlenhärtbare Bindemittel, die erhältlich sind durch polymeranaloge Umsetzung von
A) epoxidgruppenhaltigen (Meth)acrylat-Copolymerisaten mit
B) mindestens einer olefinisch ungesättigten aliphatischen C₃-C₆-Monocarbonsäure, wobei die polymeranaloge Umsetzung der Copolymerisate A
   a) mit mindestens 2, bevorzugt mit 2 bis 3 Äquivalenten, bezogen auf die Menge der Epoxidgruppen des Copolymerisats A, der Carbonsäure B
   b) in Abwesenheit einer wesentlichen Menge an Reaktionsbeschleunigern und Polymerisationsinhibitoren,
   c) in einem kontinuierlich betriebenen Reaktor,
   d) im wesentlichen lösungsmittelfrei und bevorzugt in Substanz,
   e) bei einer Reaktionstemperatur von 130 bis 170°C,
   f) mit einem Umsetzungsgrad der Epoxidgruppen des Copolymerisats A von mindestens 90% und bevorzugt mindestens 95% erfolgt,
   g) wobei eine möglichst kurze, jedoch zur Erzielung des gewählten Umsetzungsgrades f) hinreichende mittlere Verweilzeit eingestellt wird, die eine proportional zur steigenden Reaktionstemperatur e) sich verkürzende maximale mittlere Verweilzeit nicht überschreitet, die 32 Minuten bei 130°C, 25 Minuten bei 140°C, 20 Minuten bei 150°C, 17 Minuten bei 160°C und 13 Minuten bei 170°C beträgt.

Es war überraschend, daß die erfindungsgemäßen Umsetzungsprodukte im wesentlichen lösungsmittelfrei bei hohen Reaktionstemperaturen in Abwesenheit üblicher Inhibitoren, z.B. Phenolverbindungen oder Phenothiazine, und in Abwesenheit von Reaktionsbeschleunigern bzw. Katalysatoren für die Epoxid-Carbonsäure-Reaktion mit hohem Umsetzungsgrad der Epoxidgruppen hergestellt werden konnten, ohne daß bei der Umsetzung Vernetzungen auftraten und/oder ein starker Anstieg des Molekulargewichtes bzw. der Viskosität des Polymers eintrat. Die erzielte Verminderung des Produktes an niedermolekularen Nebenbestandteilen führt zu verbesserten anwendungstechnischen Eigenschaften des Produkts wie verbesserten optischen Eigenschaften.

Als epoxidgruppenhaltige (Meth)acrylat-Copolymerisate A für die Herstellung der erfindungsgemäßen polymeranalogen Umsetzungsprodukte kommen insbesondere Copolymerisate von Acrylsäureestern und/oder Methacrylsäureestern in Frage, die 40 bis 95 Gew.-% Acrylester- und/oder Methacrylester und 5 bis 60 und insbesondere 10 bis 35 Gew.-% eines copolymerisierbaren olefinisch ungesättigten Monomers mit einer Epoxidgruppe einpolymerisiert enthalten. Geeignete Ester der Acryl- und/oder Methacrylsäure sind insbesondere Alkylester mit 1 bis 10 C-Atomen im Alkylrest wie Methylmethacrylat, Methylacrylat, Ethylacrylat, Ethylmethacrylat, Isopropylacrylat, Butylacrylate und -methacrylate, wie n-Butylacrylat und n-Butylmethacrylat, 2-Ethylhexylacrylat, 2-Ethylhexylmethacrylat und n-Decylacrylat. Die Copolymerisate können aber auch andere copolymerisierbare olefinisch ungesättigte Monomere z.B. Styrol, α-Methylstyrol, Vinylester wie Vinylacetat oder (Meth)acrylnitril einpolymerisiert enthalten, soweit die anderen Monomeren keine funktionellen Gruppen enthalten, die die polymeranaloge Umsetzung zwischen den Epoxy- und Carboxylgruppen wesentlich beeinträchtigen. Beispiele geeigneter Copolymerisate olefinisch ungesättigter Monomerer mit einer Epoxidgruppe sind insbesondere olefinisch ungesättigte Glycidylester und -ether wie Allylglycidylether, Glycidylcrotonat, und bevorzugt Glycidylmethacrylat und Glycidylacrylat.

Durch eine geeignete Auswahl von "harte" Homopolymerisate (Tg > 20°C) und "weiche" (Tg < 0°C) Homopolymerisate bildenden Monomeren und der Molekulargewichte lassen sich in an sich bekannter Weise für den Verwendungszweck der polymeranalogen Umsetzungsprodukte als Lacke geeignete Copolymerisate A herstellen. Geeignete harte und weiche Homopolymerisate bildende Monomere sind z.B. in U11-mann's Encyclopedia of Industrial Chemistry, 5th Ed., Vol. A21, S.169 (1992) beschrieben. Bevorzugt weisen die Copolymerisate A ein durchschnittliches Molekulargewicht Mₙ von ca. 1500 bis 10000 und insbesondere ca. 1500 bis 6000 und eine Polydispersität M_{w}/Mₙ von kleiner als 4 und insbesondere kleiner als 3 auf. Die Herstellung solcher Copolymerisate A ist an sich bekannt (vgl. z.B. EP-B 0156170 oder DE-A 4 337 481) und erfolgt bevorzugt durch radikalische Copolymerisation in Substanz oder Lösung bei Temperaturen oberhalb von 150°C in kurzer Polymerisationszeit (< 90, bevorzugt < 25 Minuten) bis zu einem Umsatz von ca. 80 bis 90% und anschliessender Entgasung des Copolymerisats A.

Carbonsäuregruppen enthaltende Monomere B für die polymeranaloge Umsetzung sind olefinisch ungesättigte aliphatische C₃-C₆-Monocarbonsäuren, wie Acrylsäure, Methacrylsäure und/oder Crotonsäure. Bevorzugt ist die Umsetzung der Copolymerisate A mit Acrylsäure und/oder Methacrylsäure. Zur Vermeidung der Entstehung von Vernetzungen und zur Erzielung eines hohen Umsetzungsgrades der Epoxidgruppen des Copolymerisats A bei der polymeranalogen Umsetzung hat es sich als wesentlich erwiesen, das Copolymerisat A mit einem deutlichen molaren Überschuß der Carboxylgruppen des Monomers B im Verhältnis zu der Menge der Epoxidgruppen des Copolymerisats A umzusetzen. So wird das Copolymerisat mit mindestens 2 und bevorzugt mit 2 bis 3 Äquivalenten, bezogen auf die Menge der Epoxidgruppen des Copolymerisats A, der ungesättigten Carbonsäure B umgesetzt.

Es ist bekannt, dass bei der polymeranalogen Umsetzung eines Copolymerisats mit einem funktionellen polymerisierbaren Monomer die Gefahr besteht, dass das Monomere für sich polymerisiert und/ oder unter Einbeziehung der durch die Umsetzung entstandenen seitenständigen ungesättigten Gruppierungen des Copolymeren vernetzte Polymere entstehen. Die Wahrscheinlichkeit zur Polymerisation und Vernetzung steigt bekanntlich mit der Reaktionszeit und besonders mit der Reaktiontemperatur. Aus diesem Grund ist in der oben als Stand der Technik zitierten Patentanmeldung WO 97/46594 der Zusatz von angemessenen Mengen an Polymerisationsinhibitoren (S.1, letzter Absatz) als unbedingt erforderliche Maßnahme angegeben. Viele Polymerisationen von Monomeren erfolgen bekanntlich bereits bei 80 bis 100°C. Es war somit unerwartet, dass die erfindungsgemäßen unvernetzten Umsetzungsprodukte bei Reaktionstemperaturen von 130 bis 170°C in Abwesenheit wesentlicher Mengen an Reaktionsbeschleunigern für die Epoxid-Carbonsäure-Reaktion und in Abwesenheit wesentlicher Mengen an Polymerisationsinhibitoren hergestellt werden konnten. Als wesentliche Menge eines Reaktionsbeschleunigers wird hierbei eine für die Reaktionsbeschleunigung wirksame Menge desselben verstanden. Als wesentliche Menge eines Polymerisationsinhibitors wird eine als Inhibitor wirksame Menge eines Polymerisationsinhibitors angesehen, der in vorliegender Art und Menge bei Herstellung oder Anwendung zu einer Verfärbung des polymeranalogen Umsetzungsproduktes führt. "In Abwesenheit wesentlicher Mengen" bedeutet in der Regel in Gegenwart von weniger als 25 Gew.-ppm, meist weniger als 20 Gew.-ppm, insbesondere weniger als 10 Gew.-ppm an Reaktionsbeschleuniger bzw. Polymerisationsinhibitor, bezogen auf das Copolymerisat A. Bevorzugt setzt man dem Reaktionsgemisch überhaupt keinen Reaktionsbeschleuniger und überhaupt keinen Polymerisationsinhibitor zu. Dies erlaubt einmal, die Menge an unerwünschten niedermolekularen Nebenprodukten in den strahlenhärtbaren Polymeren zu vermindern. Im Hinblick darauf, dass viele übliche Polymerisationsinhibitoren wie Hydrochinonverbindungen oder Phenothiazin die damit stabilisierten Produkte bei der Herstellung oder Verwendung verfärben, erlaubt die Tatsache, dass das Umsetzungsprodukt keine wesentlichen Mengen solcher Inhibitoren enthält, die Herstellung und Verwendung transparenter unverfärbter Produkte, was einen deutlichen Vorteil der erfindungsgemäßen Umsetzungsprodukte, z.B. bei der Anwendung als Bindemittel für Klarlacke darstellt.

Die polymeranaloge Umsetzung erfolgt im wesentlichen lösungsmittelfrei bzw. in Substanz bei einer Temperatur von 130 bis 170°C und bevorzugt bei 130 bis 160°C unter wirksamer Durchmischung der Reaktanden in einem kontinuierlich betriebenen Reaktor bei einer eingestellten mittleren Verweilzeit, die möglichst kurz eingestellt wird, jedoch hinreichend zum Erreichen des Umsetzungsgrades der Epoxidgruppen von mindestens 90%, bevorzugt von mindestens 95% bei den gegebenen Bedingungen ist. Die mittlere Verweilzeit ist abhängig von der gewählten Reaktionstemperatur von 130 bis 170°C. Sie darf dabei eine mit steigender Temperatur sich verkürzende maximale mittlere Verweilzeit nicht überschreiten, die bei 130°C 32 Minuten, bei 140°C 25 Minuten, bei 150°C 20 Minuten, bei 160°C 17 Minuten und bei 170°C 13 Minuten betragen. Maximale mittlere Verweilzeiten für Reaktionstemperaturen, die zwischen den angegebenen Reaktionstemperaturen liegen, lassen sich nach Auftragen der angegebenen Zeit/Reaktionstemperatur-Werte als Funktion der maximalen mittleren Verweilzeit von der Reaktionstemperatur aus der Kurve am einfachsten graphisch ermitteln. Wieviel kürzer bei einer vorgegebenen Reaktionstemperatur die einzustellende mittlere Verweilzeit als die Maximalzeit sein kann, um dennoch den gewünschten Umsetzungsgrad f) von 90 bis 99% der Epoxidgruppen zu erreichen, kann dann in wenigen Vorversuchen ermittelt werden. So lagen bei einer Umsetzung im Extruder bei 140 bis 160°C vorteilhafte und für ein Erzielen eines Umsetzungsgrades f) von mindestens 95% hinreichende mittlere Verweilzeiten bei 10 bis 15 Minuten.

Die polymeranaloge Umsetzung erfolgt im wesentlichen lösungsmittelfrei in bekannten kontinuierlich betriebenen Reaktoren wie z.B. Rührkesseln. Den Reaktoren können mit Vorteil auch Mischer nachgeschaltet sein. Zweckmäßig ist ferner, den Reaktoren für die Umsetzung der Monomeren B mit dem Copolymerisat A Reaktoren nachzuschalten, in denen das Reaktionsprodukt durch Anlegen eines Unterdrucks von flüchtigen Bestandteilen weitgehend befreit werden kann. Als besonders vorteilhaft hat es sich bei der hohen Viskosität der Reaktionsmischung erwiesen, als Reaktoren Extruder und insbesondere Mehrschneckenextruder zu verwenden, die eine sehr gute Durchmischung des Reaktionsgemisches bei der Reaktionstemperatur in sehr kurzer Zeit gestatten. Eine Übersicht über Bauformen kontinuierlicher Reaktoren und Kriterien für deren Auswahl geben z.B. H.Thiele und H.D.Zettler "Kontinuierliche Reaktionsmaschinen" in "Polymerreaktionen und reaktives Aufbereiten in kontinuierlichen Maschinen", VDI-Verlag, Düsseldorf 1988, sowie H.Herrmann "Schneckenmaschinen in der Verfahrenstechnik", Springer-Verlag, Berlin-Heidelberg-New York 1972. Sehr geeignet für die polymeranaloge Umsetzung der Copolymerisate A in Substanz mit den reaktiven Monomeren sind Mehrschneckenextruder und insbesondere zweiwellige Schneckenmaschinen mit gleichlaufenden Schnekkenwellen wie die zweiwelligen ZSK-Schneckenextruder der Fa. Werner & Pfleiderer. So lassen sich in entsprechenden Extrudern nach einer ersten Eingabe- und Förderzone in einer 2. Zone des Extruders das auf etwa Reaktionstemperatur erhitzte und aufgeschmolzene Copolymerisat A mit dem reaktiven Monomer B vermischen. In einer 3. Zone des Extruders oder in einem nachgeschalteten 2. Extruder, wie einem gleichsinnig drehendem Zweischneckenextruder (z.B. der Type ZSK 58 der Fa. Werner & Pfleiderer) kann dann vorteilhaft die umgesetzte Masse entgast, d.h. durch Anlegen eines Unterdruckes von flüchtigen Bestandteilen weitgehend befreit werden, wobei je nach angelegtem Unterdruck die Temperatur in der Entgasungszone gleich oder verschieden von der Reaktionstemperatur sein kann. Danach wird die im allgemeinen geschmolzene Masse ausgetragen. Es kann sich dann z.B. eine Weiterverarbeitung zu Pulvern geeigneter Teilchendurchmesser anschließen.

Die erfindungsgemäßen Umsetzungsprodukte haben insbesondere Glastemperaturen im Bereich von -20 bis +70°C und sind gut verfilmbar. Sie zeichnen sich durch verbesserte optische Eigenschaften aus, sind überwiegend transparent und unverfärbt, zeigen gute Härtungseigenschaften und im gehärteten Zustand eine gute Witterungsstabilität. Sie eignen sich auch aufgrund der verminderten Gehalts an Additiven, d.h. niedermolekularen Nebenprodukten, besonders für eine Verwendung als Verpackungslacke und allgemein für eine Anwendung als vielfach verwendbare Klarlacke, Pulverlacke sowie für Powderslurries.

Die nachstehenden Beispiele sollen die Erfindung weiter erläutern, aber nicht beschränken. Soweit nicht anders angegeben, beziehen sich Teile und Prozente auf das Gewicht. Die Bestimmung des Epoxidwertes erfolgte nach DIN 53188 (vgl.auch Ullmann: Encyclopädie der technischen Chemie, Bd.8, 3.Auflage 1957, S.436). Der Feststoffgehalt wurde gravimetrisch durch 20-minütiges Trocknen bei 200°C bestimmt. Die mittleren Molekulargewichte Mₙ, M_{w} sowie die Polydispersität M_{w}/Mₙ wurden durch Gelpermeationschromatographie mit Polystyrol als Standard bestimmt. Die Methoden sind beschrieben im Analytiker-Taschenbuch Band 4, S.433-442, Berlin 1984 sowie in "Modern Size Exclusion Liquid Chromatography, Practice of Gel Permeation Chromatography", Wiley New York 1979. Die angegebenen Viskositäten wurden bestimmt mit einem Platte-Platte-Viskosimeter (C.Gerth, Rheometrie, Ullmanns Enzyklopädie der Techn. Chemie, Band 19, Seiten 17-18). Die mittlere Verweilzeit der Reaktionsmischung für die polymeranaloge Umsetzung im Reaktionstemperaturbereich im kontinuierlich betriebenen Reaktor schließt allgemein die Verweilzeit in der Entgasungszone nicht ein. Die mittlere Verweilzeit wurde bestimmt, indem am Reaktoreingang dem Reaktionsgemisch ein Titandioxid-Granulat zugefügt wurde, das ein Sensorlicht (Infrarotlicht) diffus reflektiert. Die Sensorintensität, durch die Reflektion verändert, wurde von einem Empfänger am Reaktorende (allgemein vor dem Entgasungsprozeß) detektiert und gab so ein deutlich erkennbares Signal für die mittlere Verweilzeit des Reaktionsgemisches bzw. des Polymeren im Reaktor. Die Säurezahl (mg KOH pro g Polymer) wurde durch Titration der in Aceton gelösten Probe mit methanolischer Kalilauge bestimmt.

### Beispiel 1

Ein epoxidgruppenhaltiges Copolymerisat A, das 23% Glycidylacrylat, 7% 2-Ethylhexylacrylat, 9% tert.Butylcyclohexylacrylat, 47% Methylmethacrylat und 14% Styrol einpolymerisiert enthielt, ein durchschnittliches Molekulargewicht Mₙ von 2900 g/mol und eine Polydispersität M_{w}/Mₙ von 2,6 hatte, wurde in einem zweiwelligen ZSK-Extruder der Fa. Werner & Pfleiderer mit gleichsinnig drehenden Schneckenwellen mit 2 Äquivalenten Acrylsäure, bezogen auf die Epoxidgruppenmenge des Copolymerisats A, bei 140°C in Abwesenheit eines Reaktionsbeschleunigers für die Epoxid-Carbonsäure-Reaktion und in Abwesenheit eines Polymerisationsinhibitors bis zu einem Umsatzgrad der Epoxidgruppen des Copolymerisats A von etwa 98% umgesetzt. Die mittlere Verweilzeit betrug etwa 15 Minuten. Das Umsetzungsprodukt wurde danach in einem nachgeschalteten gleichläufigen Zweiwellenextruder der Fa. Werner & Pfleiderer bei einer Temperatur von 140°C durch Anlegen eines Unterdrucks entgast. Es resultierte ein hochtransparentes, unvernetztes und unverfärbtes Umsetzungsprodukt, das sich besonders für die Herstellung eines UV-härtbaren Pulverlackes eignete.

### Vergleichsversuch 1

Beispiel 1 wurde wiederholt, jedoch wurden der Acrylsäuremenge vor der Umsetzung 2% Tetramethylammoniumbromid als Reaktionsbeschleuniger und 0,02% Phenothiazin als Polymerisationsinhibitor zugemischt, wobei sich die Prozentzahlen auf die Menge an Copolymerisat A beziehen. Die Umsetzung erfolgte ebenfalls bei 140°C bei einer mittleren Verweilzeit von etwa 15 Minuten. Das Umsetzungsprodukt wies nach Entgasung einen Umsetzungsgrad der Epoxidgruppen des Copolymerisats von 98% auf, jedoch war das resultierende Umsetzungsprodukt rötlich gefärbt.

### Vergleichsversuch 2

Beispiel 1 wurde wiederholt, jedoch wurde die Umsetzung des Copolymerisats A mit dem reaktiven Monomer in Abwesenheit eines Reaktionsbeschleunigers und in Abwesenheit eines Polymerisationsinhibitors bei 120°C bei einer mittleren Verweilzeit bei der Umsetzung von etwa 15 Minuten durchgeführt. Es resultierte ein unverfärbtes Umsetzungsprodukt, das einen Umsetzungsgrad der Epoxidgruppen des Copolymerisats A von 87% aufwies. Der hohe Restgehalt des Umsetzungsproduktes an Epoxidgruppen gefährdete die Stabilität seiner anwendungstechnischen Eigenschaften.

### Vergleichsversuch 3

Vergleichsversuch 1 wurde wiederholt, jedoch betrug die Reaktionstemperatur 120°C. Wie angegeben erfolgte die Umsetzung in Gegenwart von Reaktionsbeschleuniger und Polymerisationsinhibitor. Bei einer mittleren Verweilzeit von etwa 15 Minuten wurde ein Umsetzungsgrad der Epoxidgruppen des Copolymerisats A von 98% erzielt, jedoch war das resultierende Umsetzungsprodukt rötlich verfärbt.

### Beispiel 3

Beispiel 1 wurde wiederholt in Abwesenheit eines Reaktionsbeschleunigers und Polymerisationsinhibitors, jedoch bei einer Reaktionstemperatur von 150°C. Die mittlere Verweilzeit betrug 12 Minuten. Es resultierte ein unvernetztes transparentes und unverfärbtes Umsetzungsprodukt, dessen mittleres Molekulargewicht Mₙ 3250 betrug, d.h. nur wenig höher als das des Copolymerisats A (vgl. Beispiel 1) lag. Der Umsetzungsgrad der Epoxidgruppen des Copolymerisats A betrug 98%.

## Patentansprüche

1. Additivarme unvernetzte strahlenhärtbare Bindemittel, erhältlich durch polymeranaloge Umsetzung von
A) epoxidgruppenhaltigen (Meth)acrylat-Copolymerisaten A mit
B) mindestens einer olefinisch ungesättigten aliphatischen C₃-C₆-Monocarbonsäure,
wobei die polymeranaloge Umsetzung der Copolymerisate A
a) mit mindestens 2 Äquivalenten, bezogen auf die Epoxidgruppen des Copolymerisats A, der Carbonsäure B
b) in Abwesenheit einer wesentlichen Menge eines Reaktionsbeschleunigers für die Epoxid-Carbonsäure-Reaktion und in Abwesenheit einer wesentlichen Menge eines Polymerisationsinhibitors,
c) in einem kontinuierlich betriebenen Reaktor,
d) im wesentlichen lösungsmittelfrei,
e) bei einer Reaktionstemperatur von 130 bis 170°C, und
f) mit einem Umsetzungsgrad der Epoxidgruppen des Copolymerisats A von mindestens 90% erfolgt,
g) wobei eine zur Erzielung des gewählten Umsetzungsgrades f) hinreichende mittlere Verweilzeit eingestellt wird, die eine mit steigender Reaktionstemperatur e) sich verkürzende maximale mittlere Verweilzeit nicht überschreitet, die 32 Minuten bei 130°C, 25 Minuten bei 140°C, 20 Minuten bei 150°C, 17 Minuten bei 160°C und 13 Minuten bei 170°C beträgt.

2. Additivarme strahlenhärtbare Bindemittel nach Anspruch 1, **dadurch gekennzeichnet, daß** der Umsetzungsgrad mindestens 95% beträgt.

3. Additivarme strahlenhärtbare Bindemittel nach Anspruch 1 oder 2, **dadurch gekennzeichnet, daß** es sich bei dem kontinuierlich betriebenen Reaktor um einen Extruder handelt.

4. Additivarme strahlenhärtbare Bindemittel nach Anspruch 3, **dadurch gekennzeichnet, daß** die Reaktionstemperatur im Extruder 140 bis 160°C, der Umsetzungsgrad f) mindestens 95% und die mittlere Verweilzeit etwa 10 bis 15 Minuten betragen.

5. Additivarme strahlenhärtbare Bindemittel nach einem der vorhergehenden Ansprüche, **dadurch gekennzeichnet, daß** es sich bei dem Copolymerisat A um ein Alkyl(meth)acrylatcopolymerisat handelt, das 5 bis 60 Gew.-%, bezogen auf das Gesamtgewicht des Copolymerisats, eines reaktive Epoxidgruppen enthaltenden Comonomers einpolymerisiert enthält.

6. Additivarme strahlenhärtbare Bindemittel nach einem der vorhergehenden Ansprüche, **dadurch gekennzeichnet, daß** sie transparent und unverfärbt sind.

7. Verfahren zur Herstellung der additivarmen strahlenhärtbaren Bindemittel nach einem der Ansprüche 1 bis 6 durch polymeranaloge Umsetzung von
A) reaktive Epoxidgruppen enthaltenden Copolymerisaten mit
B) mindestens einer olefinisch ungesättigten aliphatischen C₃-C₆-Monocarbonsäure,
wobei die polymeranaloge Umsetzung der Copolymerisate A
a) mit mindestens 2 Äquivalenten, bezogen auf die Epoxidgruppen des Copolymerisats A, der Carbonsäure B
b) in Abwesenheit einer wesentlichen Menge eines Reaktionsbeschleunigers für die Epoxid-Carbonsäure-Reaktion und in Abwesenheit einer wesentlichen Menge eines Polymerisationsinhibitors,
c) in einem kontinuierlich betriebenen Reaktor,
d) im wesentlichen lösungsmittelfrei,
e) bei einer Reaktionstemperatur von 130 bis 170°C, und
f) mit einem Umsetzungsgrad der Epoxidgruppen des Copolymerisats A von mindestens 90% erfolgt,
g) wobei eine zur Erzielung des gewählten Umsetzungsgrades f) hinreichende mittlere Verweilzeit eingestellt wird, die eine mit steigender Reaktionstemperatur e) sich verkürzende maximale mittlere Verweilzeit nicht überschreitet, die 32 Minuten bei 130°C, 25 Minuten bei 140°C, 20 Minuten bei 150°C, 17 Minuten bei 160°C und 13 Minuten bei 170°C beträgt.

8. Verwendung der Bindemittel nach einem der Ansprüche 1 bis 6 für Klarlacke, Pulverlacke, Verpackungslacke oder Powderslurries.
